# EUROPEAN PATENT APPLICATION

(11) **EP 2 509 333 A1**
(43) Date of publication of application: **10.10.2012**
(21) Application number: 12162421.7
(22) Date of filing: 30.03.2012
(51) Int. Cl.: H04N 21/4788, H04N 21/81, H04N 21/43, H04N 21/6587, H04N 21/6405

(54) **Information processing apparatus, information processing method, and program for synchronized playback on multiple devices**

(30) Priority: 06.04.2011 JP 2011084499
(71) Applicant: Sony Corporation, Tokyo 108-0075 (JP)
(72) Inventor: Toyoda, Takahiro, Minato-ku, Tokyo 108-0075 (JP); Hanai, Tomoyuki, Minato-ku, Tokyo 108-0075 (JP); Miki, Nanami, Minato-ku, Tokyo 108-0075 (JP); Nagasaka, Hideo, Minato-ku, Tokyo 108-0075 (JP); Murabayashi, Noboru, Minato-ku, Tokyo 108-0075 (JP)
(74) Representative: Lewis, Darren John

(57) **Abstract**

An information processing apparatus that includes an interface that receives first content transmitted from a content distribution apparatus to the information processing apparatus and another information processing apparatus in synchronization. The information processing apparatus also includes a processor that controls a reproduction state of the first content at the information processing apparatus, and controls the interface to transmit reproduction state information corresponding to the reproduction state to the content distribution apparatus. The content distribution apparatus controls transmission of second content to the another information processing apparatus based on the received reproduction state information.

## Description

This application claims the benefit of priority to Japanese Priority Patent Application JP 2011-084499 filed in the Japan Patent Office on April 6, 2011, the entire contents of which are hereby incorporated by reference.

The present disclosure relates to an information processing apparatus, an information processing method, and a program, and more particularly, to an information processing apparatus, an information processing method, and a program by which a plurality of users can view the same scene at the same time regardless of a viewing condition.

There is known a method of synchronizing the content reproduction to allow people who are in remote locations to view the same scene of the same content at the same time (refer to JP-A-2006-41885). Using the synchronized reproduction of the content, it is possible to exchange opinions and thoughts on the same scene in real time through a chat or the like between people who are in remote locations.

However, the synchronized reproduction of the content is based on the assumption that users are viewing a content continuously. Specifically, the synchronized reproduction does not contemplate a case where a user leave from the content viewing place. Even for a user leave from the content viewing place, the synchronized reproduction content is continuously reproduced as it is reproduced to other users. Therefore, a user left from the content viewing place is not able to view the same scene at the same time as other users.

It is therefore desirable to allow a plurality of users to view the same scene at the same time regardless of a viewing condition.

Various respective aspects and features of the invention are defined in the appended claims. Combinations of features from the dependent claims may be combined with features of the independent claims as appropriate and not merely as explicitly set out in the claims.

According to a first exemplary embodiment, the disclosure is directed to an information processing apparatus that includes an interface that receives first content transmitted from a content distribution apparatus to the information processing apparatus and another information processing apparatus in synchronization. The information processing apparatus also includes a processor that controls a reproduction state of the first content at the information processing apparatus, and controls the interface to transmit reproduction state information corresponding to the reproduction state to the content distribution apparatus. The content distribution apparatus controls transmission of second content to the another information processing apparatus based on the received reproduction state information.

According to another exemplary embodiment, the disclosure is directed to an information processing method performed by an information processing apparatus. The method including receiving, at an interface of the information processing apparatus, first content transmitted from a content distribution apparatus to the information processing apparatus and another information processing apparatus in synchronization; controlling, by a processor of the information processing apparatus, a reproduction state of the first content at the information processing apparatus; and controlling, by the processor, the interface to transmit reproduction state information corresponding to the reproduction state to the content distribution apparatus, wherein the content distribution apparatus controls transmission of second content to the another information processing apparatus based on the received reproduction state information.

According to another exemplary embodiment, the disclosure is directed to a non-transitory computer-readable medium including computer program instructions, which when executed by an information processing apparatus, cause the information processing apparatus to perform a method. The method including receiving first content transmitted from a content distribution apparatus to the information processing apparatus and another information processing apparatus in synchronization; controlling a reproduction state of the first content at the information processing apparatus; and transmitting reproduction state information corresponding to the reproduction state to the content distribution apparatus, wherein the content distribution apparatus controls transmission of second content to the another information processing apparatus based on the received reproduction state information.

According to another exemplary embodiment, the disclosure is directed to an information processing apparatus. The information processing apparatus including a processor that controls an interface to transmit first content to a plurality of display devices, wherein the interface receives information indicating a reproduction state of the first content at the one of the plurality of display devices, and the processor controls the interface to transmit second content to another one of the plurality of display devices upon receiving the information indicating the reproduction state.

As described above, according to the embodiments of the present disclosure, a plurality of users can view the same scene at the same time regardless of viewing condition.

Embodiments of the invention will now be described with reference to the accompanying drawings, throughout which like parts are referred to by like references, and in which:
Fig. 1 is a block diagram illustrating a configuration of a co-viewing system according to a first embodiment.
Figs. 2A to 2D are diagrams illustrating an overview of the co-viewing.
Fig. 3 is a block diagram illustrating a configuration example of a server.
Fig. 4 is a block diagram illustrating a configuration example of a display device.
Fig. 5 is a block diagram illustrating a functional configuration example of a system controller.
Figs. 6A to 6C are diagrams illustrating a co-viewing technique in which the content is switched depending on an excitement degree of a content.
Figs. 7A to 7C are diagrams illustrating a co-viewing technique in a case where a pause time of the content is long.
Figs. 8A to 8D are diagrams illustrating another co-viewing technique in a case where a pause time of the content is long.
Fig. 9 is a flowchart illustrating a flow of synchronized reproduction processing of the display device.
Fig. 10 is a flowchart illustrating a flow of the synchronized reproduction processing of another display device.
Fig. 11 is a diagram illustrating a display example of the display.
Fig. 12 is a block diagram illustrating a configuration of a co-viewing system according to a second embodiment.

As embodiments of the present disclosure, two embodiments (hereinafter, referred to as first and second embodiments, respectively) will be described in the following order.
1. First Embodiment (Co-viewing Content and Individual CM Content are streamed)
2. Second embodiment (Co-viewing Content is Determined from Content Recorded in Each Display Device)

Hereinafter, the embodiments of the present disclosure will be described with reference to the accompanying drawings.

### <First Embodiment>

### [Configuration Example of Co-viewing System 1]

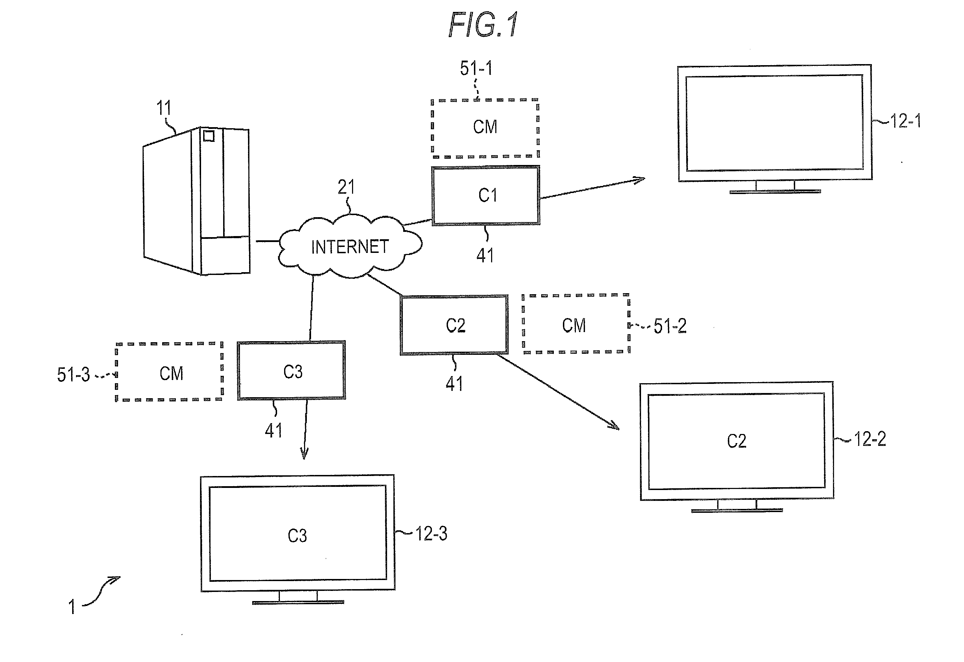

Fig. 1 is a block diagram illustrating a configuration of the co-viewing system according to the first embodiment of the present disclosure.

The "co-viewing" refers to a viewing technique in which a plurality of users view the same scene of a content at the same time using a synchronized reproduction of the content.

The content includes a movie, music, theater, literature, photography, a cartoon, an animation, a computer game, a character, a shape, a color, sound, an action, a video, or a combination thereof. The content includes a program for providing information relating to them using the electronic computer (such as an instruction to the electronic computer and a combination thereof to obtain a single result). However, in the present embodiment, the video (moving picture) is employed as the content. Also, since it is necessary to record the content in the recording medium, the content takes a form of data capable of being recorded in the recording medium.

The scene is a predetermined segment of a video segmented from the content, and a single content includes a collection of plural scenes.

In a co-viewing system 1 of Fig. 1, a server 11 and display devices 12-1 to 12-N (N denotes an integer value equal to or greater than 2, in this example of Fig. 1, set to 3) are connected to each other via the Internet 21. In addition, a user U1 (not shown, similarly hereinafter) uses the display device 12-1, a user U2 uses the display device 12-2, and a user U3 uses the display device 12-3, to perform the co-viewing of the content. Hereinafter, unless necessary to distinguish individually, the display devices 12-1 to 12-3 are collectively referred to as the display device 12.

The server 11 streams a co-viewing content 41 to each of the display devices 12-1 to 12-3 via the Internet 21. The server 11 streams individual CM (commercial message) contents 51-1 to 51-3 to the display devices 12-1 to 12-3, respectively, via the Internet 21.

The co-viewing content 41 is a video (moving picture) serving as a co-viewing target for the users U1 to U3 and is transmitted in the form of streaming data. The individual CM content 51-i (i denotes any integer value between 1 and 3) is reproduced in the display device 12-i by switching from the co-viewing content 41 depending on the viewing condition of the user Ui. As the individual CM content 51-i, other contents relating to the co-viewing content 41, an advertisement content, or an individual content for a user Ui reflecting each user's Ui preference may be employed. Hereinafter, the co-viewing content 41 and individual CM contents 51-1 to 51-3 are collectively referred to as the content, appropriately. That is, unless specified otherwise, it is assumed that the content is any one of the co-viewing content 41 and individual CM contents 51-1 to 51-3. In addition, in terms of a display location, the content reproduced in the display device 12-i is referred to as the content Ci.

The server 11 receives from the display devices 12-1 to 12-3 information regarding whether or not the co-viewing content 41 is reproduced and transmits, to each display device 12-1 to 12-3, information regarding whether or not the co-viewing content 41 is reproduced in other display devices 12 (hereinafter, referred to as reproduction information of other devices).

The display device 12-i buffers the content streamed from the server 11. The display device 12-i reproduces by switching between the co-viewing content 41 and the individual CM content among buffered contents depending on the received reproduction information of other devices from the server 11.

In addition, a user Ui who manipulates the display device 12-i may switch the reproduction mode of the display device 12-i between a normal reproduction mode or a synchronized reproduction mode when the co-viewing content 41 is viewed. In the normal reproduction mode, the co-viewing content 41 is reproduced without interruption. In the synchronized reproduction mode, reproduction is switched between the co-viewing content 41 and the individual CM content 51-i depending on a viewing condition of other user Uj (j denotes an integer value beween 1 to 3 other than the value i).

The display device 12-i may transmit text data or the like input by a user Ui to other display device 12-j via the Internet 21 so as to allow the users Ui and Uj to chat (that is, real-time conversation) during the co-viewing of the co-viewing content 41.

### [Overview of Co-viewing]

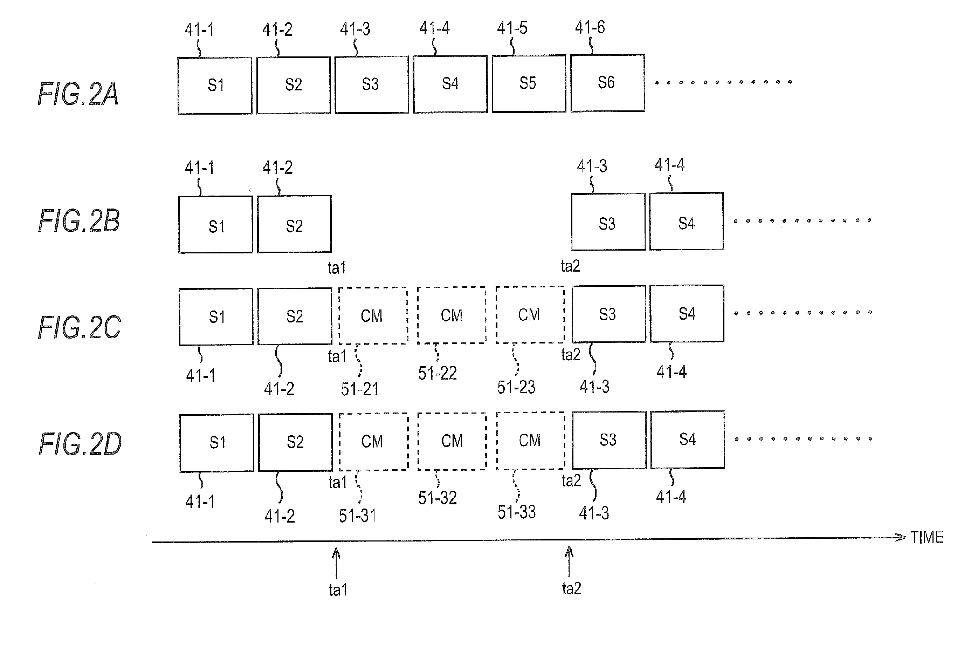

Figs. 2A to 2D are diagrams illustrating an overview of the co-viewing using the co-viewing system 1.

The abscissa shown in the bottom of Figs. 2A to 2D denotes time.

Fig. 2A illustrates the co-viewing content 41 reproduced by each display device 12-1 to 12-3 in synchronization in the normal reproduction mode. The co-viewing content 41 includes the scenes 41-1 to 41-M (M denotes an integer value equal to or greater than 2). Each scene 41-1 to 41-M is continuously reproduced in its turn. In addition, in Fig. 2A, it is assumed that M is equal to or greater than 6, the scenes 41-1 to 41-6 among the scenes 41-1 to 41-M are only represented.

Fig. 2B illustrates the content C1 reproduced in the display device 12-1 when the user U1 manipulates the display device 12-1, pauses reproduction of the co-viewing content 41, and then reproduces the co-viewing content 41 in the synchronized reproduction mode. In addition, in the following description, although description will be made for a situation that the user U1 pauses reproduction of the co-viewing content 41, a similar processing may be performed for a case where other users Uj pause reproduction of the co-viewing content 41.

It is assumed that, in the middle of co-viewing of the co-viewing content 41 in a predetermined viewing place, for example, at the time point ta1 when reproduction of the scene 41-2 of the co-viewing content 41 is terminated, the user U1 manipulates the input device such as a remote controller to instruct the display device to pause reproduction of the co-viewing content 41, and then leaves the viewing place. In this case, the display device 12-1 pauses reproduction of the co-viewing content 41 from the time point ta1 depending on this instruction.

Then, the user U1 returns to the viewing place, manipulates the input device at the time point ta2, and instructs to release the pause of reproduction of the co-viewing content 41. In this case, the display device 12-1 releases the pause state of the co-viewing content 41 at the time point ta2 and resumes the reproduction from the scene 41-3 which is the next scene of the scene 41-2.

Fig. 2C illustrates the content C2 reproduced by the display device 12-2 in the synchronized reproduction mode. In the display device 12-2, the co-viewing content 41 is continuously reproduced as the content C2 until the time point ta1. However, if the user U1 instructs to pause the reproduction of the co-viewing content 41 and leaves the viewing place at time point ta1, the display device 12-2 switches the content C2 serving as a display target from the co-viewing content 41 to the individual CM content 51-2. The display device 12-2 continuously reproduces the individual CM content 51-2 from the time point ta1 to the time point ta2 at which the user U1 instructs to release the pause of the co-viewing content 41.

The individual CM content 51-2 includes the scenes 51-21 to 51-2n (n denotes an integer value equal to greater than 1), and the corresponding scene is reproduced between the time points ta1 and ta2. In the example of Fig. 2C, the scenes 51-21 to 51-23 as the individual CM content 51-2 are reproduced between time points ta1 and ta2.

Then, from the time point ta2 at which the user U1 instructs release of the pause state of the co-viewing content 41, the display device 12-2 switches the content C2 from the individual CM content 51-2 to the co-viewing content 41 and resumes reproduction of the co-viewing content 41. In this case, reproduction is made from the scene 41-3 of the co-viewing content 41.

Fig. 2D illustrates a content C3 reproduced by the display device 12-3 in the synchronized reproduction mode. Similar to the display device 12-2, the display device 12-3 continuously reproduces the co-viewing content 41 as the content C3 until the time point ta1. However, at the time point ta1 when the user U1 instructs to pause reproduction of the co-viewing content 41 and leaves the viewing place, the display device 12-3 switches the content C3 serving as a display target from the co-viewing content 41 to the individual CM content 51-3. The display device 12-3 continuously reproduces the individual CM content 51-3 from the time point ta1 to the time point ta2 at which a user U1 instructs to release the pause of the co-viewing content 41.

The individual CM content 51-3 includes the scenes 51-31 to 51-3n (n denotes an integer value equal to or greater than 1), and the corresponding scene is reproduced from the time point ta1 to the time point ta2. In the example of Fig. 2D, the scenes 51-31 to 51-33 as the individual CM content 51-3 are reproduced between time points ta1 and ta2.

Then, from the time point ta2 at which the user U1 instructs release of the pause state of the co-viewing content 41, the display device 12-3 switches the content C3 from the individual CM content 51-3 to the co-viewing content 41 and resumes the reproduction of the co-viewing content 41. In this case, reproduction is made from the scene 41-3 of the co-viewing content 41.

In addition, the user U1 manipulates the input device and instructs to pause the reproduction of the co-viewing content 41 if the user U1 leaves the viewing place. However, the pause of reproduction of the co-viewing content 41 may not depend on manipulation of the input device by the user U1. That is, the reproduction of the co-viewing content 41 may be paused if it is determined that the user U1 leaves the viewing place from the detection result from a sensor and the like. Similarly, the pause of reproduction of the co-viewing content 41 may be released if it is determined that the user U1 returns to the viewing place from the detection result of a sensor and the like without depending on manipulation of the input device by the user U1.

In this manner, if the user U1 instructs to pause reproduction of the co-viewing content 41, the content C2 viewed by the user U2 is switched from the co-viewing content 41 to the individual CM content 51-2. Similarly, the content C3 viewed by the user U3 is switched from the co-viewing content 41 to the individual CM content 51-3.

That is, the display device 12-1 used by the user U1 to view the content C1 pauses reproduction of the co-viewing content 41 depending on the instruction manipulation of the user U1 if the user U1 leaves the viewing place. In synchronization, both the display device 12-2 used by the user U2 to view the content C2 and the display device 12-3 used by the user U3 to view the content C3 pause reproduction of the co-viewing 41. However, the user U2 maintains the viewing condition without receding from the viewing place in the meantime. For this reason, the display device 12-2 does not pause reproduction of the content C2 but reproduces the individual CM content 51-2 as the content C2 instead of the co-viewing content 41. Similarly, the user U3 maintains the viewing condition without receding from the viewing place. For this reason, the display device 12-3 does not pause reproduction of the content C3 but reproduces the individual CM content 51-3 as the content C3 instead of the co-viewing content 41.

Then, if the user U1 returns to the viewing place and instructs to resume the reproduction, the display device 12-1 resumes the reproduction of the co-viewing content 41. In synchronization, the display device 12-2 for the user U2 continuously reproduces by switching the content C2 from the individual CM content 51-2 to the co-viewing content 41. Similarly, the display device 12-3 for the user U3 continuously reproduces by switching the content C3 from the individual CM content 51-3 to the co-viewing content 41.

Therefore, in the middle of the co-viewing, even when one user U1 of users leaves the viewing place, the users U1, U2, and U3 can view the same scene of the same content at the same time.

### [Configuration Example of Server 11]

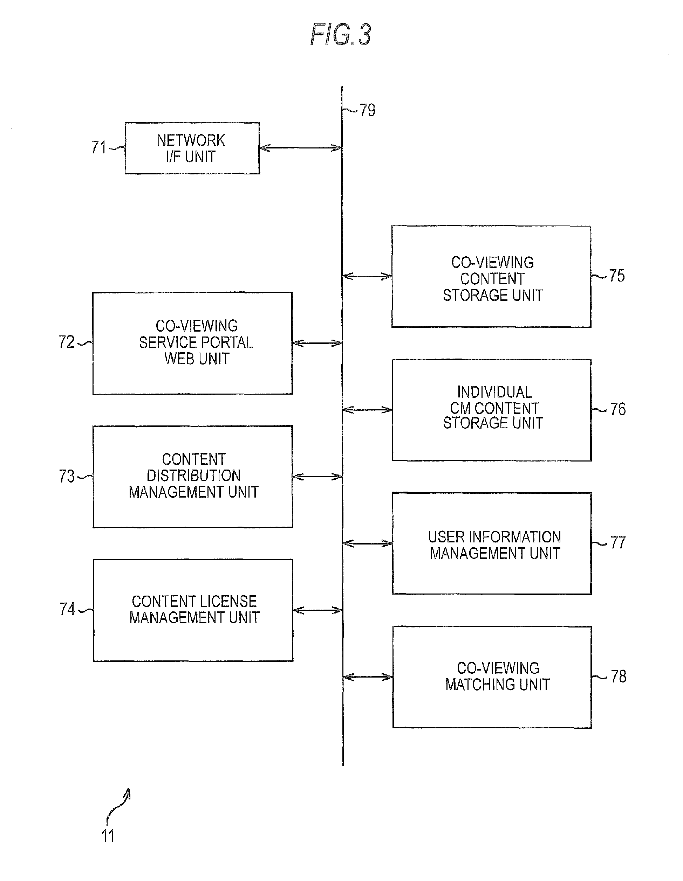

Fig. 3 is a block diagram illustrating a configuration example of the server 11 of the co-viewing system 1 of Fig. 1.

In the server 11, a network I/F unit 71, a co-viewing service portal WEB unit 72, a content distribution management unit 73, a content license management unit 74, a co-viewing content storage unit 75, an individual CM content storage unit 76, a user information management unit 77, and a co-viewing matching unit 78 are connected to each other via the Inter/Intra network 79. The server 11 is connected to the Internet 21 via the network I/F unit 71.

The co-viewing service portal WEB unit 72 is a device that provides a service that allows a plurality of users to cooperatively view the content (hereinafter, referred to as a co-viewing service). For this reason, the co-viewing service portal WEB unit 72 individually communicates with the display devices 12-1 to 12-3 via the Internet 21 and exchanges information necessary in the co-viewing.

Therefore, the display device 12-i accesses the co-viewing service portal WEB unit 72 via the Internet 21 if the users want to receive the co-viewing service. In this case, the co-viewing service portal WEB unit 72 exchanges, for example, information for suggesting users Ui who use the display device 12-i to participate in the co-viewing between the display device 12-i. That is, the co-viewing service portal WEB unit 72 transmits information indicating a fact that co-viewing can be made from the predetermined date and time to a user Ui and suggests a user Ui participate in the co-viewing.

The content distribution management unit 73 instructs the co-viewing content storage unit 75 to distribute the co-viewing content 41 to each of the display devices 12-1 to 12-3. In addition, the content distribution management unit 73 instructs the CM content storage unit 76 to distribute the individual CM contents 51-1 to 51-3 to each of the display devices 12-1 to 12-3. For example, the content distribution management unit 73 instructs the co-viewing content storage unit 75 and the individual CM content storage unit 76 to distribute the predetermined content at a predetermined date and time suggested by the co-viewing content service portal WEB unit 72 for a user Ui.

The content license management unit 74 manages licenses of the co-viewing content 41 and individual CM contents 51-1 to 51-3 to be distributed to the display device 12.

The co-viewing content storage unit 75 records the co-viewing content 41.

The individual CM content storage unit 76 records the individual CM contents 51-1 to 51-3.

The user information management unit 77 manages information on a user Ui who is a co-viewing service target and the display device 12-i for a user Ui.

The co-viewing matching unit 78 determines a user Ui who is a co-viewing service target and the co-viewing content 41 and the individual CM contents 51-1 to 51-3 to be delivered.

### [Configuration Example of Display Device 12]

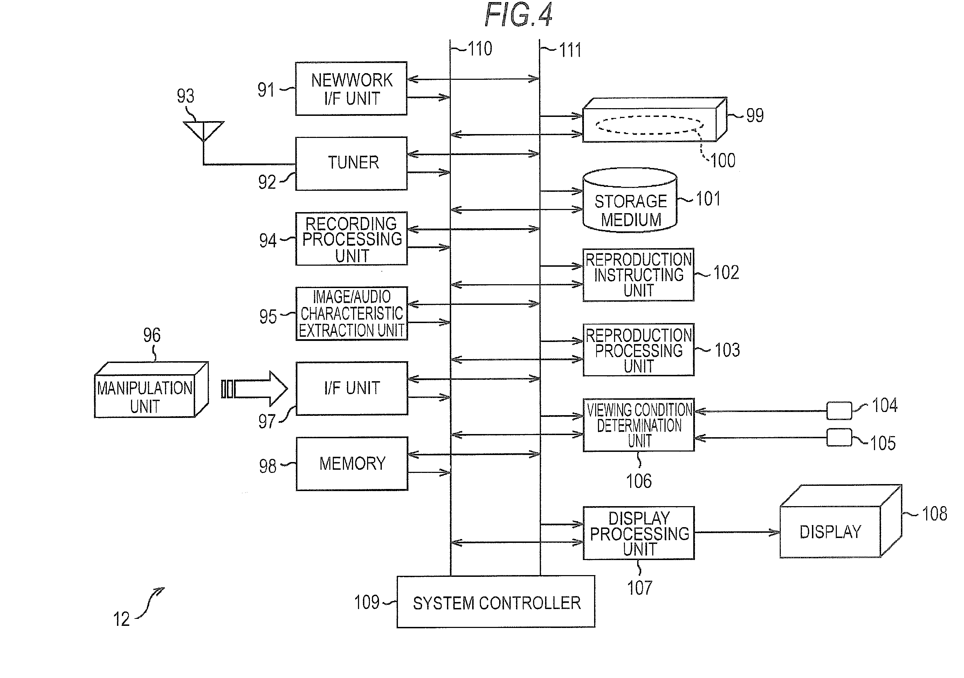

Fig. 4 is a block diagram illustrating a configuration example of the display device 12 of the co-viewing system 1 of Fig. 1.

In the display device 12, a network I/F unit 91, a tuner 92, a recording processing unit 94, an image and audio characteristic extraction unit 95, a manipulation unit 96, an I/F unit 97, a memory 98, a disk drive 99 are connected to each other through a control bus 110. In addition, in the display device 12, a recording medium 101, a reproduction instruction unit 102, a reproduction processing unit 103, a vision sensor 104, an auditory sensor 105, a viewing condition determination unit 106, a display processing unit 107, a display 108, and a system controller 109 are connected to each other through a control bus 110. Data of each element of the display device 12 are transmitted and received through a data bus 111.

The display device 12 is connected to the Internet 21 via the network I/F unit 91. That is, the content delivered from the server 11 is received by the network I/F unit 91 from the Internet 21 and is provided to the recording processing unit 94.

The tuner 92 selects a target station from a plurality of broadcast stations (not shown) and receives the content (television program or the like) broadcasted using radio waves from the station selected as a target station through an antenna 93. The tuner 92 demodulates the received radio waves, performs various processing for the content corresponding to the image signal as a result, and supplies the result to the recording processing unit 94.

The recording processing unit 94 transforms the content distributed from the server 11 and received by the network I/F unit 91 or the content broadcasted from the station and received by the tuner 92 into a form suitable for recording in the record medium 101, for example, a compression encode data type complying with a predetermined compression encode scheme, and records the transformed data in the record medium 101.

The image and audio characteristic extraction unit 95 extracts the image characteristic amount and the audio characteristic amount from the co-viewing content 41 among the contents distributed from the server 11 and received by the network I/F unit 91 and provides the extraction result to the system controller 109. In addition, the image characteristic amount and the audio characteristic amount of the co-viewing content 41 are used to extract the excitement characteristic indicating an excitement degree of the content. The excitement characteristic will be described below.

The manipulation unit 96 includes a remote controller having a button, a dial, or the like and receives a predetermined manipulation from a user Ui. A user Ui may instruct reproduction, pause, or the like of the content by manipulating the manipulation unit 96. In addition, a user Ui may instruct the switching of the reproduction mode of the content by manipulating the manipulation unit 96.

The I/F unit 97 supplies the manipulation signal based on a manipulation received through the manipulation unit 96 to the system controller 109.

The memory 98 includes a read only memory (ROM), a random access memory (RAM), or the like, and appropriately stores data necessary in the system controller 109 to perform various processes.

The disk drive 99 is appropriately provided with a magnetic disc, an optical disc, a magnetic optical disc, a removable media 100 made of semiconductor memory, and the like. The content read therefrom is buffered in the record medium 101 as necessary.

The record medium 101 includes a hard disk, a flash memory, or the like, and buffers the image signal of the content provided from the recording processing unit 94. Alternatively, the record medium 101 buffers the content recorded in the removable media 100 mounted on the disk driver 99.

The reproduction instruction unit 102 instructs the reproduction processing unit 103 to perform the reproduction processing based on the instruction of the system controller 109.

The reproduction processing unit 103 reproduces the content recorded in the removable media 100 mounted on the disk driver 99 or the content buffered in the record medium 101 based on the instruction of the reproduction instruction unit 102.

The vision sensor 104 and the auditory sensor 105 detect whether or not a user Ui is located in a position where a user can view the co-viewing content 41 displayed on the display 108 and provides the detection result to the viewing condition determination unit 106.

The viewing condition determination unit 106 determines the viewing condition of a user Ui based on the detection result provided from the vision sensor 104 and the auditory sensor 105 and provides the determination result to the system controller 109. That is, the viewing condition determination unit 106 determines whether a user leaves the viewing place or returns to the viewing place.

The display processing unit 107 transforms the content reproduced by the reproduction processing unit 103 into an appropriate form in order to display it on the display device 108 and provides it to the display device 108.

The display device 108 displays the content provided from the display processing unit 107.

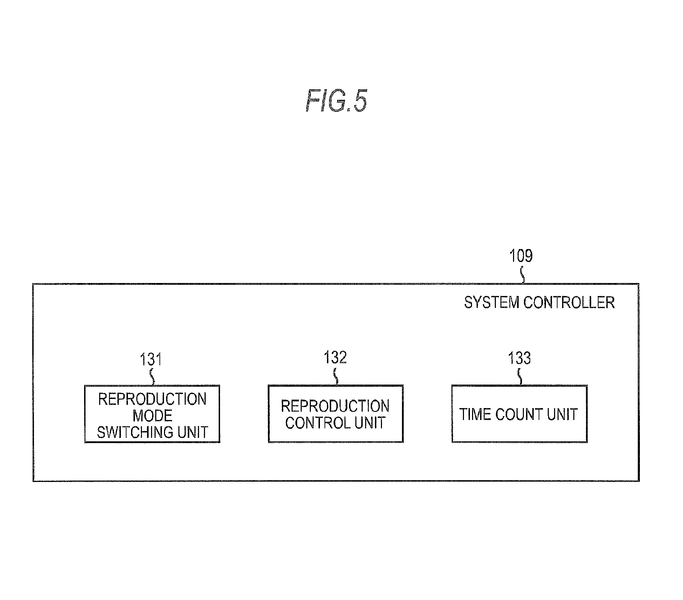

The system controller 109 controls the entire process of the display device 12. The function of the system controller 109 will be described with reference to Fig. 5.

### [Functional Configuration Example of System Controller]

Fig. 5 is a block diagram illustrating a functional configuration example of the system controller 109.

The system controller 109 includes a reproduction mode switching unit 131, a reproduction control unit 132, and a time count unit 133.

The reproduction mode switching unit 131 switches the reproduction mode between the normal reproduction mode and the synchronized reproduction mode based on the manipulation signal from the manipulation unit 96 which receives a predetermined manipulation by a user.

The reproduction control unit 132 controls reproduction of the content by instructing the reproduction instruction unit 102 to reproduce or pause reproduction of the content. For example, the reproduction control unit 132 instructs the reproduction instruction unit 102 to reproduce the content based on the manipulation signal from the manipulation unit 96 which receives a predetermined manipulation from a user. In addition, the reproduction control unit 132 instructs the reproduction instruction unit 102 to pause or the reproduce the content based on the determination result of the viewing condition from the viewing condition determination unit 106 such that reproduction of the content is paused when a user leaves the viewing place, and the pause is released when the corresponding user returns to the viewing place.

The reproduction control unit 132 instructs the reproduction instruction unit 102 to reproduce the content based on reproduction information of other devices or the like provided from the server 11 via the Internet 21.

Moreover, the reproduction control unit 132 computes the excitement characteristic from the image and audio characteristics extracted by the image and audio characteristic extraction unit 95. The excitement characteristic is a time-dependent variation of the value indicating an excitement degree of the content. A high excitement characteristic value indicates that the content is more exciting. The excitement degree is an estimation amount regarding how much a plurality of viewers feel excitement. The reproduction control unit 132 computes the excitement characteristic depending on the change of the image characteristic of the co-viewing content 41 (that is, it may be determined that the excitement is higher as a change of the image characteristic amount is significant) and the change of the audio characteristic (that is, it may be determined that the excitement is higher as the audio level increases).

The time count unit 133 counts the reproduction time and the pause time of the content.

In the co-viewing content system 1 having such a configuration, even when one user U1 of users leaves the viewing place in the middle of co-viewing of users U1 to U3 for the co-viewing content 41, users U1 to U3 can view the same scene of the co-viewing content 41 at the same time after the user U1 returns to the viewing place. That is, all of plural users U1 to U3 can view the same scene of the co-viewing content 41 at the same time when each viewer is located in each viewing place. Even when the reproduction of the co-viewing content 41 is paused when the user U1 leaves from the viewing place, for example, individual CM contents 51-2 and 51-3 reflected their own preferences are reproduced for each user U2 and U3 in the meantime. Therefore, users can obtain useful information and does not get bored.

However, if the contents C2 and C3 viewed by each user U2 and U3 are suddenly switched from the co-viewing content 41 to the individual CM contents 51-2 and 51-3, respectively, at the timing when reproduction of the co-viewing content 41 is paused as the user U1 leaves from the viewing place, there is a concern that users U2 and U3 may feel a sense of discomfort. Therefore, in order to avoid such a concern, for example, a timing depending on the excitement characteristic of the co-viewing content 41 may be employed as a timing for switching the contents C2 and C3 viewed by users U2 and U3, respectively, from the co-viewing content 41 to the individual CM contents 51-2 and 51-3, respectively. It is envisaged that, from the viewpoints of users U2 and U3, the discomfort of users U2 and U3 is reduced when switching is made to the individual CM contents 51-2 and 51-3, respectively, at the time point when the excitement degree of the co-viewing content 41 actually viewed by users U2 and U3 is lowered, rather than at the time point of a behavior that the user U1 leaves the viewing place (in addition, that behavior is not recognized instantaneously because it is not seen by users U2 and U3).

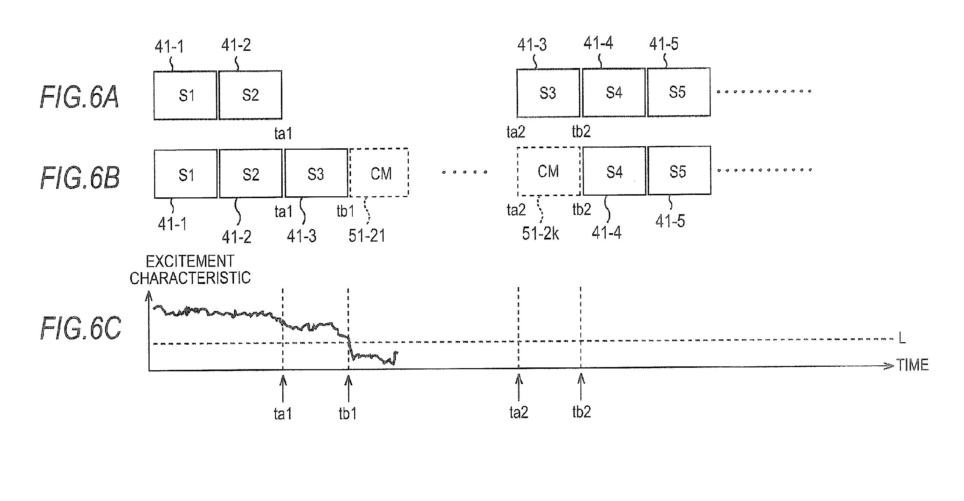

A co-viewing method switching the content by the excitement characteristic of the content will be described with reference to Figs. 6A to 9.

### [Co-viewing Method of Switching Content by Excitement Degree of Content]

Figs. 6A to 6C are diagrams illustrating the method of co-viewing switching the content depending on the degree of the excitement of the content.

Fig. 6A illustrates the content C1 reproduced in the display device 12-1 for the user U1.

Fig. 6B illustrates the content C2 reproduced in the display device 12-2 for the user U2. In addition, in the following description, for simplicity of description, although description will be made for only the content C2 reproduced in the display device 12-2, the content C3 reproduced in the display device 12-3 is basically similar to the content C2. However, the individual CM contents 51-2 and 51-3 reproduced in the display devices 12-2 and 12-3 may be different.

Fig. 6C is a graph illustrating an excitement characteristic of the co-viewing content 41. The ordinate of Fig. 6C denotes an instantaneous value of the excitement characteristic, and the abscissa denotes time. In addition, a predetermined threshold L is set for the excitement characteristic in advance.

As shown in Fig. 6A, it is assumed that, since the user U1 starts to recede from the viewing place at the time point tal when the reproduction is terminated for the scene 41-2 of the co-viewing content 41, reproduction of the content C1 is paused. In this case, in the display device 12-1, the co-viewing content 41 is paused from the time point tal. That is, the time point tal serves as a pause start point of the co-viewing content 41 in the display device 12-1.

Meanwhile, as shown in Fig. 6B, for the content C2, even after reproduction of the content C1 is paused at the time point ta1, the co-viewing content 41 is continuously reproduced until the scene 41-3. In addition, at the time point tb when the excitement characteristic of the co-viewing content 41 is equal to or lower than the threshold L, reproduction of the content C2 is switched from the co-viewing content 41 to the individual CM content 51-2. That is, the time point tb1 serves as a pause start point of the co-viewing content 41 of the display device 12-2.

Then, as shown in Fig. 6A, in the display device 12-1, the pause state of the co-viewing content 41 as the content C1 is released at the time point ta2. Then, the display device 12-1 starts reproduction from the scene 41-3 next to the scene 41-2 of the co-viewing content 41 as the content C1. That is, the time point ta2 serves as a pause release point of the co-viewing content 41 of the display device 12-1.

Meanwhile, as shown in Fig. 6B, even after the display device 12-1 starts reproduction of the co-viewing content 41 as the content C1 at the time point ta2, the display device 12-2 continuously reproduce the individual CM content 51-2. That is, the display device 12-2 continuously reproduces the individual CM content 51-2 until all of the scenes of the co-viewing content 41 reproduced as the content C2 are reproduced as the content C1 of the display device 12-1 from the time point ta1 to the time point ta2 during which the co-viewing content 41 reproduced in the display device 12-1 as the content C1 is paused.

Specifically, as shown in Fig. 6B, the display device 12-2 reproduces the scene 41-3 of the co-viewing content 41 as the content C2 from the time point ta1 to the time point ta2. Therefore, until the time point tb2 at which reproduction of the scene 41-3 of the co-viewing content 41 as the content C1 is terminated in the display device 12-1, the display device 12-2 continuously reproduce the individual CM content 51-2 as the content C2. In addition, in the example of Fig. 6B, the scenes 51-21 to 51-2k of the individual CM content 51-2 are reproduced from the time point tb1 to the time point tb2. In addition, at the time point tb2, the content C2 is switched from the individual CM content 51-2k to the scene 41-4 of the co-viewing content 41. Therefore, the time point tb2 serves as a pause release point of the co-viewing content 41 of the display device 12-2.

After the time point tb2, as both the contents C1 and C2, the same scene of the co-viewing content 41 is reproduced at the same timing in synchronization.

In this manner, it is envisaged that, as the timing for switching the content C2 from the co-viewing content 41 to the individual CM content 51-2, the discomfort of the user U2 is reduced by employing the timing depending on the excitement characteristic of the co-viewing content 41.

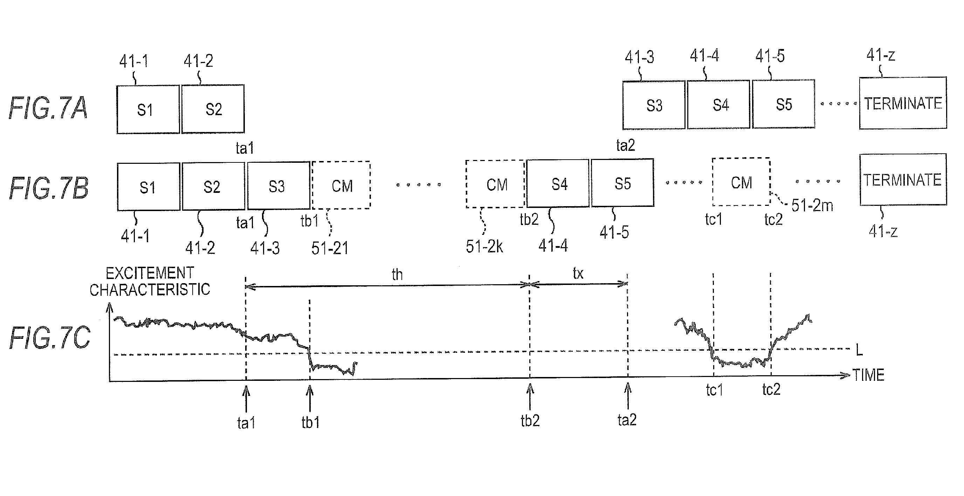

However, in the example of Figs. 6A to 6D, the individual CM content 51-2 is continuously reproduced as the content C2 while reproduction of the co-viewing content 41 as the content C1 is paused. Therefore, if the pause state of the co-viewing content 41 as the content C1 lasts for a long time, the user U2 is not allowed to view the co-viewing content 41 for a long time. Therefore, in the example of Figs. 7A to 8D described below, a certain allowable time is set in advance while reproduction of the content C1 is paused. In addition, if the time during which reproduction of the content C1 is paused exceeds the allowable time, the content C2 is switched to the co-viewing content 41.

### [Co-viewing Technique When Content C1 is Paused for Long Time]

Figs. 7A to 7C are diagrams illustrating a co-viewing technique when the content C1 is paused for a long time.

Fig. 7A illustrates the content C1 reproduced in the display device 12-1 for the user U1.

Fig. 7B illustrates the content C2 reproduced in the display device 12-2 for the user U2.

Fig. 7C is a graph illustrating an excitement characteristic of the co-viewing content 41. In Fig. 7C, the ordinate denotes an instantaneous value of the excitement characteristic, and the abscissa denotes time. In addition, a predetermined threshold L is set for the excitement characteristic in advance.

In the example of Figs. 7A to 7C, description for the processing similar to that of Figs. 6A to 6D will not be appropriately repeated.

As shown in Fig. 7A, at the time point ta1 when reproduction of the scene 41-2 of the co-viewing content 41 is terminated, the user U1 starts to recede from the viewing place, and thus, reproduction of the content C1 is paused. In this case, in the display device 12-1, reproduction of the co-viewing content 41 is paused from the time point ta1. That is, the time point ta1 serves as the pause start point of the co-viewing content 41 of the display device 12-1.

In the present method, a certain allowable time th is set in advance for the time during which the content C1 is continuously paused. Therefore, if the co-viewing content 41 as the content C1 is paused, the pause state lasting time tp (hereinafter, referred to as a pause time tp) starts to be counted. That is, in the example of Figs. 7A to 7C, the pause time tp starts to be counted from the time point ta1.

Meanwhile, as shown in Fig. 7B, for the content C2, even after reproduction of the content C1 is paused at the time point ta1, the co-viewing content 41 is continuously reproduced until the scene 41-3. In addition, at the time point tb1 when the excitement characteristic of the co-viewing content 41 is equal to or lower than the threshold L, the content C2 is switched from the co-viewing content 41 to the individual CM content 51-2. That is, the time point tb 1 serves as a pause start point of the co-viewing content 41 of the display device 12-2.

Then, if the pause time tp exceeds the allowable time th even when the pause state of the co-viewing content 41 as the content C1 is continued, the content C2 is switched to the co-viewing content 41. That is, in the display device 12-2, at the time point tb2 at which the pause time tp exceeds the allowable time th, the content C2 is switched from the individual CM content 51-2k to the scene 41-4 of the co-viewing content 41. Therefore, the time point tb2 serves as a pause release point of the co-viewing content 41 of the display device 12-2.

If the pause time tp of the co-viewing content 41 of the display device 12-1 exceeds the allowable time th, the pause time tx starts to be newly counted from that time point. That is, from the time point tb2 at which the pause time tp exceeds the allowable time th, the pause time tx of the co-viewing content 41 as the content C1 starts to be counted. While the pause time tx for the co-viewing content 41 as the content C1 is continued, the pause state of the co-viewing content 41 is continued in the display device 12-1, and reproduction of the co-viewing content 41 is continued in the display device 12-2.

Then, as shown in Fig. 7A, in the display device 12-1, at the time point ta2, the pause state of the co-viewing content 41 as the content C1 is released. Then, in the display device 12-1, reproduction starts from the scene 41-3 of the co-viewing content 41 as the content C1. That is, the time point ta2 serves as a pause release point of the co-viewing content 41 of the display device 12-1. In addition, the pause time tx of the co-viewing content 41 of the content C1 lasts from the time point tb2 which is the pause release point of the co-viewing content 41 of the content C2 to the time point ta2 which is the pause release point of the co-viewing content 41 of the content C1.

After the time point ta2, the co-viewing content 41 is reproduced as both the contents C1 and C2. However, for the content C1, reproduction of the scene of the co-viewing content 41 is delayed by the amount reproduced as the content C2 during the pause time tp of the co-viewing content 41 of the content C2 of the display device 12-2. That is, in each of the display devices 12-1 and 12-2, the co-viewing content 41 being reproduced is deviated by the pause time tp of the co-viewing content 41 of the display device 12-1.

Therefore, after the time point ta2, the display device 12-2 removes a deviation of the time tp by appropriately inserting reproduction of the individual CM content 51-2 as the content C2. Similarly, in this case, as a determination factor regarding whether or not the display device 12-2 switches the content C2 from the co-viewing content 41 to the individual CM content 51-2, an excitement characteristic of the co-viewing content 41 is employed in order to reduce the discomfort of the user U2.

As shown in Fig. 7B, the display device 12-2 switches the content C2 from the co-viewing content 41 to the individual CM content 51-2 from the time point tc1 at which the excitement characteristic of the co-viewing content 41 is equal to or lower than the threshold value L to the time point tc2. As a result, the display device 12-2 reproduces the scene 51-2m of the individual CM content 51-2.

Until the temporal deviation corresponding to the reproduced amount of the co-viewing content 41 is removed from each display devices 12-1 and 12-2, the display device 12-2 inserts the individual CM content 51-2 as the content C2 and then, repeatedly executes a switching process for the co-viewing content 41 again. That is, after the time point ta2, the display device 12-2 reproduces the co-viewing content 41 with a delay corresponding to the pause time tp of the co-viewing content 41 of the display device 12-1.

Then, if the temporal deviation corresponding to the reproduced portion of the co-viewing content 41 is removed in each of the display devices 12-1 and 12-2, as both the contents C1 and C2, the same scene of the co-viewing content 41 is reproduced at the same timing. The co-viewing is terminated if the reproduction of the final scene 41-z of the co-viewing content 41 is terminated as both the contents C1 and C2.

In this manner, by setting the certain allowable time th for the time that the content C1 is continuously paused, it is possible to avoid a problem that the user U2 is not able to view the co-viewing content 41 for a long time. In addition, since the excitement characteristic of the co-viewing content 41 is employed as a determination criterion for inserting the individual CM content 51-2 as the content C2 in order to remove the temporal deviation of the reproduced portion of the co-viewing content 41 in each of the display devices 12-1 and 12-2, it is possible to reduce the discomfort of the user U2.

In the example of Figs. 7A to 7C, the individual CM content 51-2 is inserted as the content C2 in order to remove the temporal deviation of the reproduced portion of the co-viewing content 41 in each of the display devices 12-1 and 12-2. However, a technique for removing the temporal deviation of the reproduced portion of the co-viewing content 41 in each display device 12-1 and 12-2 is not limited thereto. For example, in addition to insertion of the individual CM content 51-2 as the content C2, the temporal deviation may be removed by reproducing the co-viewing content 41 reproduced as the content C1 by skipping a predetermined scene.

### [Another Co-viewing Technique When Content C1 is Paused for Long Time]

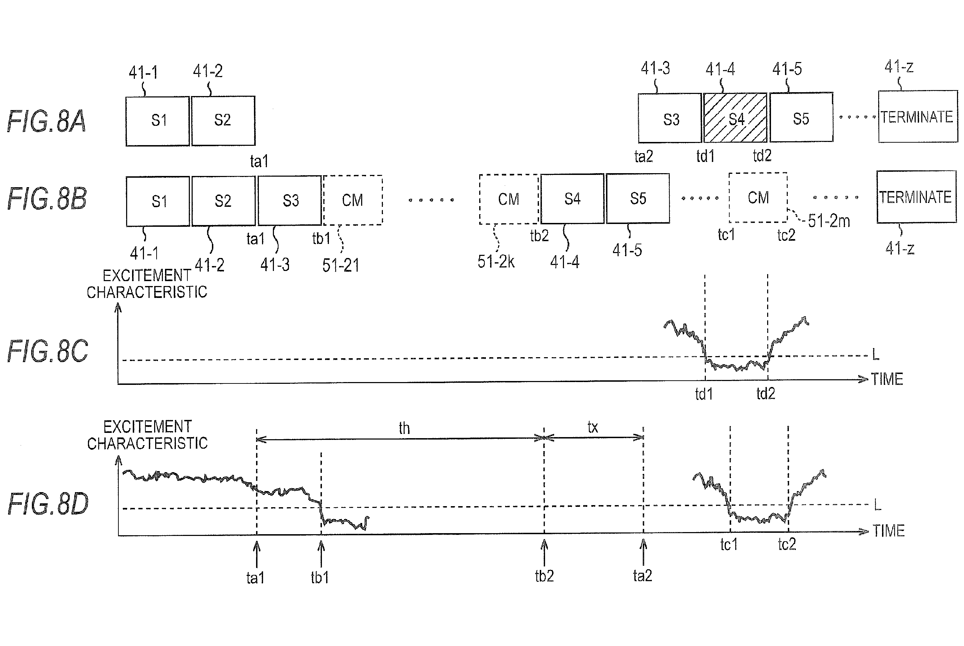

Figs. 8A to 8D are diagrams illustrating another co-viewing technique when the content C1 is paused for a long time.

Fig. 8A illustrates the content C1 reproduced in the display device 12-1 for the user U1.

Fig. 8B illustrates the content C2 reproduced in the display device 12-2 for the user U2.

Fig. 8C is a graph illustrating an excitement characteristic of the co-viewing content 41. In Fig. 8C, the ordinate denotes an instantaneous value of the excitement characteristic, and the abscissa denotes time. In addition, a predetermined threshold L is set as the excitement characteristic in advance.

The examples of Figs. 8A to 8D are basically similar to the examples of Figs. 7A to 7C. Therefore, repetitive description for a similar processing will not be repeated, but description will be made by focusing on a different processing, that is, the processing subsequent to the time point ta2.

After the time point ta2, the co-viewing content 41 is reproduced as both the contents C1 and C2. However, for the content C1, reproduction of the scene of the co-viewing content 41 is delayed by the amount reproduced as the content C2 during the pause time tp of the co-viewing content 41 of the content C2 in the display device 12-2. That is, the co-viewing content 41 reproduced in each display device 12-1 and 12-2 has a deviation by the pause time tp of the co-viewing content 41 of the display device 12-1.

Therefore, in the display device 12-1, a deviation corresponding to the time tx is removed by appropriately skipping reproduction of a predetermined scene of the co-viewing content 41 as the content C1 in addition to inserting reproduction of the individual CM content 51-2 as the content C2 in the display device 12-2 after the time point ta2.

Similarly, in this case, the excitement characteristic of the co-viewing content 41 is employed to reduce the discomfort of the user U2 as a determination factor regarding whether or not the display device 12-2 switches the content C2 from the co-viewing content 41 to the individual CM content 51-2. In addition, the excitement characteristic of the co-viewing content 41 is employed to reduce the discomfort of the user U1 as a determination factor regarding whether or not the display device 12-1 skips reproduction of a predetermined scene of the co-viewing content 4 as the content C1.

As shown in Fig. 8B, the display device 12-2 switches the content C2 from the co-viewing content 41 to the individual CM content 51-2 from the time point tc1 at which the excitement characteristic of the co-viewing content 41 is equal to or lower than the threshold L to the time point tc2. As a result, in the display device 12-2, the scene 51-2m of the individual CM content 51-2 is reproduced.

As shown in Fig. 8A, the display device 12-1 performs reproduction by skipping the scene 41-4 of the co-viewing content 41 from the time point td l at which the excitement characteristic of the co-viewing content 41 is equal to or lower than the threshold L to the time point td2. That is, in the display device 12-1, reproduction is performed by skipping the scene 41-4 corresponding to the scene between the time points td1 and the td2 of the co-viewing content 41.

Until the temporal deviation of the reproduced portion of the co-viewing content 41 in each display device 12-1 and 12-2 is removed, the aforementioned processing is executed repeatedly.

Then, if the temporal deviation of the reproduced portion of the co-viewing content 41 in each display device 12-1 and 12-2 is removed, the same scene of the co-viewing content 41 is reproduced as both the contents C1 and C2 at the same time. The co-viewing is terminated if reproduction of the final scene 41-z of the co-viewing content 41 as the both the contents C1 and C2 is terminated.

In order to remove the temporal deviation of the reproduced portion of the co-viewing content 41 in each display device 12-1 and 12-2, not only by inserting the individual CM content 51-2 as the content C2, but also by skipping a predetermined scene of the co-viewing content 41 as the content C1, it is possible to remove the temporal deviation more rapidly.

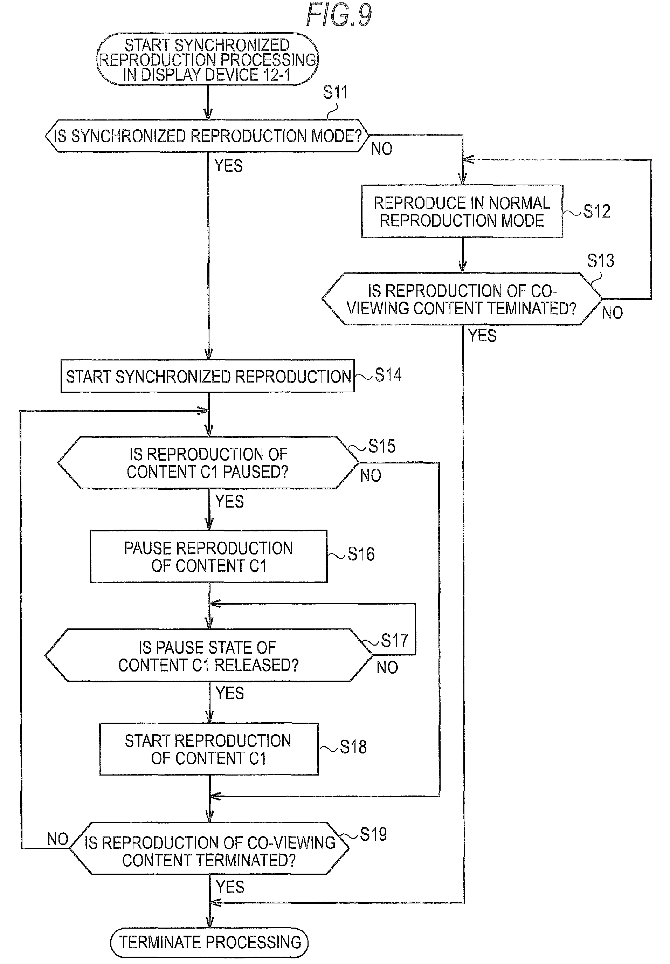

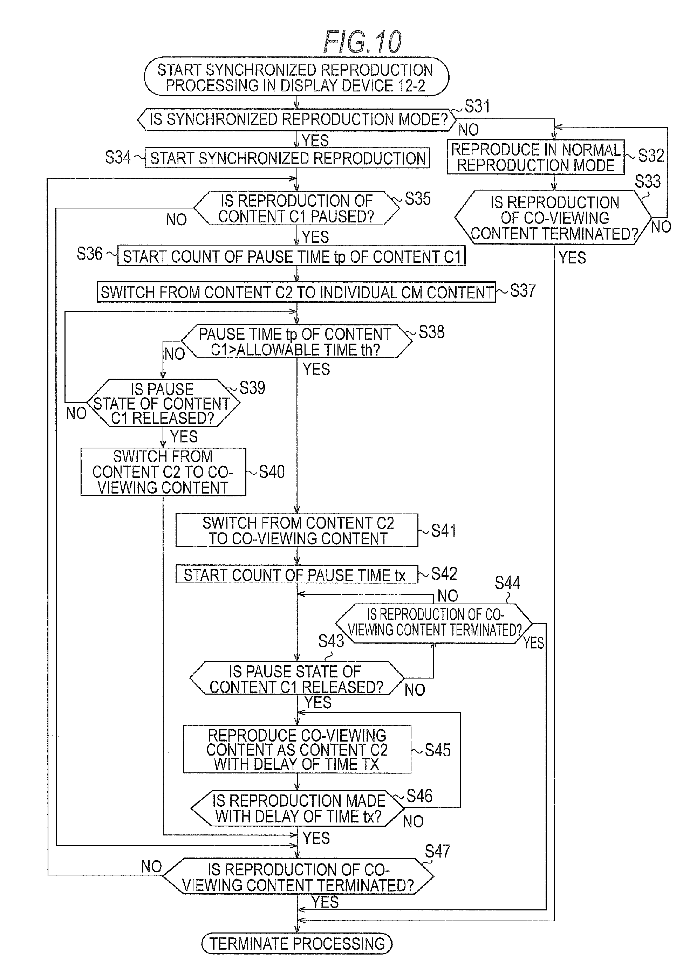

Next, in the co-viewing when the content C1 is paused for a long time, the processing simultaneously executed in the display devices 12-1 and 12-2 (hereinafter, referred to as synchronized reproduction processing) will be described with reference to Figs. 9 and 10.

### [Synchronized Reproduction Processing in Display Device 12-1]

Fig. 9 is a flowchart illustrating a flow of the synchronized reproduction processing of the display device 12-1.

In step S 11, the reproduction mode switching unit 131 determines whether or not the synchronized reproduction mode is selected. That is, the reproduction mode switching unit 131 determines whether or not the reproduction mode is switched to the synchronized reproduction mode depending on the manipulation signal from the manipulation unit 96 where a predetermined manipulation is received from the user U1.

In the synchronized reproduction mode, it is determined YES in step S11, and the process advances to step S14. The processing subsequent to step S14 will be described below.

Otherwise, if it is determined that the synchronized reproduction mode is not selected, that is, in the normal reproduction mode, it is determined NO in step S11, and the process advances to step S12.

In step S12, the reproduction control unit 132 performs reproduction in the normal reproduction mode. That is, the reproduction control unit 132 reproduces the co-viewing content 41 without interruption.

In step 513, the reproduction control unit 132 determines whether or not reproduction of the co-viewing content 41 is terminated. That is, the reproduction control unit 132 determines whether or not reproduction of the final scene 41-z of the co-viewing content 41 is terminated.

If reproduction of the co-viewing content 41 is not terminated, it is determined NO in step S13, and the process returns to step S12 so that the subsequent processing is repeated. That is, the loop process of steps S12 and S13 is repeated until reproduction of the co-viewing content 41 is terminated.

Then, if reproduction of the co-viewing content 41 is terminated, it is determined YES in step 513, and the synchronized reproduction processing of the display device 12-1 is terminated.

Meanwhile, in the synchronized reproduction mode, it is determined YES in step S11, and the process advances to step S14.

In step S14, the reproduction control unit 132 starts the synchronized reproduction. That is, the reproduction control unit 132 starts reproduction of the co-viewing content 41. In addition, the processing in step S14 is executed simultaneously with the processing in step S34 of Fig. 10 described above.

In step S15, the reproduction control unit 132 determines whether or not reproduction of the content C1 is paused. That is, the reproduction control unit 132 determines whether the manipulation signal based on a predetermined manipulation provided from the I/F unit 97 by the user U1 is a pause signal of the reproduction of the co-viewing content 41 or whether or not a determination result of the viewing condition indicating that a user leaves the viewing place is provided from the viewing condition determination unit 106.

If reproduction of the content C1 is not paused, it is determined NO in step S15, and the process advances to step S19. The processing subsequent to step S19 will be described below.

Otherwise, if reproduction of the content C1 is paused, it is determined YES in step S15, and the process advances to step S16.

The reproduction control unit 132 pauses reproduction of the content C1 in step S16. That is, as shown in Fig. 7A, if the reproduction control unit 132 pauses at the time point ta1 at which reproduction of the scene 41-2 of the co-viewing content 41 as the content C1 is terminated, the co-viewing content 41 has a pause state from the time ta1.

In step S17, the reproduction control unit 132 determines whether or not the pause state of the content C1 is released. That is, the reproduction control unit 132 determines whether or not the manipulation signal based on a predetermined manipulation provided from the I/F unit 97 by the user U1 is for releasing the pause of reproduction of the co-viewing content 41 as the content C1 or whether or not a determination result of the viewing condition that a user returns to the viewing place is provided from the viewing condition determination unit 106.

If the pause state of the content C1 is not released, it is determined NO in step S17, and the process returns to step S17 so that the subsequent processing is repeated. That is, the determination process of step S17 is repeated until the pause state of the co-viewing content 41 as the content C1 is released.

Then, if the pause state of the content C1 is released, it is determined YES in step S17, and the process advances to step S18.

The reproduction control unit 132 starts the reproduction of the content C1 in step S18. That is, as shown in Fig. 7A, if the pause state of the co-viewing content 41 as the content C1 is released at the time point ta2, the reproduction control unit 132 starts reproduction from the scene 41-3 of the co-viewing content 41 as the content C1.

In step S19, the reproduction control unit 132 determines whether or not reproduction of the co-viewing content 41 is terminated. That is, the reproduction control unit 132 determines whether or not reproduction of the final scene 41-z of the co-viewing content 41 is terminated.

If reproduction of the co-viewing content 41 is not terminated, it is determined NO in step S19, and the process returns to step S15 so that the subsequent processing is repeated. That is, the loop process of steps S15 to S19 is repeated until reproduction of the co-viewing content 41 is terminated.

Then, if reproduction of the co-viewing content 41 is terminated, it is determined YES in step S19, and the synchronized reproduction processing of the display device 12-2 is terminated. In addition, in this case, the display device 12-2 which performs the synchronized reproduction terminates reproduction of the co-viewing content 41 simultaneously.

Next, the synchronized reproduction of the display device 12-2 performed simultaneously with the aforementioned synchronized reproduction processing of the display device 12-1 will be described.

### [Synchronized Reproduction Processing in Display Device 12-2]

Fig. 10 is a flowchart illustrating a flow of the synchronized reproduction processing of the display device 12-2.

In step S31, the reproduction mode switching unit 131 determines whether or not the synchronized reproduction mode is selected. That is, the reproduction mode switching unit 131 determines whether or not the reproduction mode is switched to the synchronized reproduction mode depending on the manipulation signal from the manipulation unit 96 which receives a predetermined manipulation from the user U2.

In the synchronized reproduction mode, it is determined YES in step S31, and the process advances to step S34. The processing subsequent to step S34 will be described below.

Otherwise, if it is determined that the synchronized reproduction mode is not selected, that is, in the normal reproduction mode, it is determined NO in step S3 1, and the process advances to step S32.

In step S32, the reproduction control unit 132 performs reproduction in the normal reproduction mode. That is, the reproduction control unit 132 reproduces the co-viewing content 41 without interruption.

In step S33, the reproduction control unit 132 determines whether or not reproduction of the co-viewing content 41 is terminated. That is, the reproduction control unit 132 determines whether or not reproduction of the final scene 41-z of the co-viewing content 41 is terminated.

If reproduction of the co-viewing content 41 is not terminated, it is determined NO in step S33, and the process returns to step S32 so that the subsequent processing is repeated. That is, the loop process of steps S32 and S33 is repeated until the reproduction of the co-viewing content 41 is terminated.

Then, if the reproduction of the co-viewing content 41 is terminated, it is determined YES in step S33, and the synchronized reproduction processing of the display device 12-2 is terminated.

Meanwhile, in the synchronized reproduction mode, it is determined YES in step S31, and the process advances to step S34.

In step S34, the reproduction control unit 132 starts the synchronized reproduction. That is, the reproduction control unit 132 starts reproduction of the co-viewing content 41. In addition, the processing in step S34 is executed simultaneously with the processing in step S14 of Fig. 9 described above.

In step S35, the reproduction control unit 132 determines whether or not reproduction of the content C1 is paused. That is, the reproduction control unit 132 determines whether or not reproduction information of other devices indicating that reproduction of the co-viewing content 41 as the content C1 is paused in the display device 12-1 is received, from the server 11.

If the reproduction of the content C1 is paused (that is, it is determined YES in step S15 of Fig. 9, and the process of step S16 is executed), it is determined YES in step S35, and the process advances to step S36. The processing subsequent to step S36 will be described below.

Otherwise, if reproduction of the content C1 is not paused (that is, it is determined NO in step S15 of Fig. 9), it is determined NO in step S3 5, and the process advances to step S47.

In step S47, the reproduction control unit 132 determines whether or not reproduction of the co-viewing content 41 is terminated. That is, the reproduction control unit 132 determines whether or not reproduction of the final scene 41-z of the co-viewing content 41 is terminated.

If reproduction of the co-viewing content 41 is not terminated, it is determined NO in step S47, and the process returns to step S35 so that the subsequent processing is repeated. That is, the loop process of steps S35 to S47 is repeated until the reproduction of the co-viewing content 41 is terminated.

Then, if reproduction of the co-viewing content 41 is terminated, it is determined YES in step S47, and the synchronized reproduction processing of the display device 12-2 is terminated.

Otherwise, if reproduction of the content C1 is paused, it is determined YES in step S35, and the process advances to step S36.

In step S36, the time count unit 133 starts to count the pause time tp of the content C1. That is, as shown in Figs. 7A to 7C, the time count unit 133 starts to count the pause time tp from the time point ta1 which is a pause start point of the co-viewing content 41 as the content C1.

In step S37, the reproduction control unit 132 switches the content C2 to the individual CM content 51-2. In this case, the reproduction control unit 132 switches the content C2 to individual CM content 51-2 depending on the excitement characteristic of the co-viewing content 41. That is, as shown in Figs. 7A to 7C, the reproduction control unit 132 switches the content C2 from the co-viewing content 41 to individual CM content 51-2 at the time point tb1 at which the excitement characteristic of the co-viewing content 41 as the content C2 is equal to or lower than the threshold L.

In step S38, the reproduction control unit 132 determines whether or not the pause time tp of the content C1 exceeds the allowable time th. That is, the reproduction control unit 132 determines whether or not the pause time tp of the co-viewing content 41 as the content C1 exceeds the allowable time th.

If the pause time tp of the content C1 exceeds the allowable time th, it is determined YES in step S38, and the process advances to step S41. The processing subsequent to step S41 will be described below.

Otherwise, if the pause time tp of the content C1 is within the allowable time th, it is determined NO in step S38, and the process advances to step S39.

In step S39, the reproduction control unit 132 determines whether or not the pause state of the content C1 is released. That is, the reproduction control unit 132 determines whether or not reproduction information of other devices indicating that the pause state the co-viewing content 41 as the content C1 is released in the display device 12-1 is received, from the server 11.

If the pause state of the content C1 is not released, it is determined NO in step S39, and the process returns to step S38 so that the subsequent processing is repeated. That is, the loop process of steps S38 and S39 is repeated until the pause state of the co-viewing content 41 as the content 1 is released.

Then, if the pause state of the content C1 is released, it is determined YES in step S39, and the process advances to step S40.

In step S40, the reproduction control unit 132 switches the content C2 to the co-viewing content 41. In this case, the reproduction control unit 132 switches the content C2 to the co-viewing content 41 after reproduction of all scenes of the co-viewing content 41 reproduced as the content C2 is terminated in the display device 12-1 while the co-viewing content 41 as the content C1 is paused.

Then, the process advances to step S47. The processing subsequent to step S47 will be described below.

Meanwhile, in step S3 8, if the pause time tp of the content C1 exceeds the allowable time th, it is determined YES, and the process advances to step S41.

In step S41, the reproduction control unit 132 switches the content C2 to the co-viewing content 41. That is, as shown in Fig. 7B, the reproduction control unit 132 switches the content C2 to the co-viewing content 41 from the CM content 51-2 at the time point tb2 at which the pause time tp exceeds the allowable time th.

In step S42, the time count unit 133 starts to count the pause time tx. That is, as shown in Fig. 7C, the time count unit 133 starts to count the pause time tx of the co-viewing content 41 as the content C1 from the time point tb2 at which the pause time tp exceeds the allowable time th.

In step S43, the reproduction control unit 132 determines whether or not the pause state of the content C1 is released. That is, the reproduction control unit 132 determines whether or not reproduction information of other devices indicating that the pause state of the co-viewing content 41 as the content C1 is released in the display device 12-1 is received from the server 11.

If the pause state of the content C1 is released (that is, it is determined YES in step S17 of Fig. 9), it is determined YES in step S43, and the process advances to step S45. The processing subsequent to step S45 will be described below.

Otherwise, if the pause state of the content C1 is not released (that is, it is determined NO in step S17 of Fig. 9), it is determined NO in step S43, and the process advances to step S44.

In step S44, the reproduction control unit 132 determines whether or not reproduction of the co-viewing content 41 is terminated. That is, the reproduction control unit 132 determines whether or not reproduction of the final scene 41-z of the co-viewing content 41 is terminated.

If reproduction of the co-viewing content 41 is terminated, that is, if reproduction of the co-viewing content 41 of the content C2 is terminated while the content C1 is paused, the synchronized reproduction processing of the display device 12-2 is terminated.

On the other hand, if reproduction of the co-viewing content 41 is not terminated, it is determined NO in step S44, and the process returns to step S43.

Then, if the pause state of the content C1 is released, it is determined YES in step S43, and the process advances to step S45.

In step S45, the reproduction control unit 132 reproduce the co-viewing content 41 as the content C2 with a delay of the time tx. That is, the co-viewing content 41 reproduced in each of the display devices 12-1 and 12-2 is deviated by the pause time tx of the co-viewing content 41 of the display device 12-1. Therefore, the reproduction control unit 132 appropriately inserts reproduction of the individual CM content 51-2 as the content C2 depending on the excitement characteristic of the co-viewing content 41 in order to remove the deviation corresponding to the time tx. If the excitement characteristic of the co-viewing content 41 is equal to or lower than the threshold L, the reproduction control unit 132 repeats the process of switching the content C2 from the co-viewing content 41 to the individual CM content 51-2.

In step S46, the reproduction control unit 132 determines whether or not the co-viewing content 41 as the content C2 is reproduced with a delay of the time tx. That is, the reproduction control unit 132 determines whether or not the individual CM content 51-2 as the content C2 is inserted in order to remove the temporal deviation in the reproduced portion of the co-viewing content 41 in each of the display devices 12-1 and 12-2, and the co-viewing content 41 is reproduced with a delay of the time tx.

If the co-viewing content 41 is not reproduced with a delay of the time tx, it is determined NO in step S46, the process returns to step S46 so that the subsequent processing is repeated. That is, the loop process of steps S45 and S46 is repeated until the co-viewing content 41 is reproduced with a delay of the time tx.

Then, if the co-viewing content 41 is reproduced with a delay of the time tx, it is determined YES in step S46, and the process advances to step S47.

In step S47, the reproduction control unit 132 determines whether or not the reproduction of the co-viewing content 41 is terminated. That is, the reproduction control unit 132 determines whether or not reproduction of the final scene 4l -z of the co-viewing content 41 is terminated.

If reproduction of the co-viewing content 41 is not terminated, it is determined NO in step S47, and the process returns to step S35 so that the subsequent processing is repeated. That is, the loop process of steps S35 to S47 is repeated until reproduction of the co-viewing content 41 is terminated.

Then, if reproduction of the co-viewing content 41 is terminated, it is determined YES in step S47, and the synchronized reproduction processing of the display device 12-2 is terminated. In addition, in this case, the display device 12-1 which performs the synchronized reproduction terminates reproduction of the co-viewing content 41 at the same time.

In the example of Fig. 10, the individual CM content 51-2 as the content C2 is appropriately inserted in order to remove the temporal deviation in the reproduced portion of the co-viewing content 41 in each of the display devices 12-1 and 12-2. However, in order to remove the temporal deviation in the reproduced portion of the co-viewing content 41 in each of the display devices 12-1 and 12-2, the technique using the example of Figs. 8A to 8D may be used. That is, the co-viewing content 41 as the content C1 may be reproduced by skipping a predetermined scene.

Next, a display example of the display 108 in which the co-viewing is performed in the display device 12 will be described.

### [Display Example of Co-viewing]

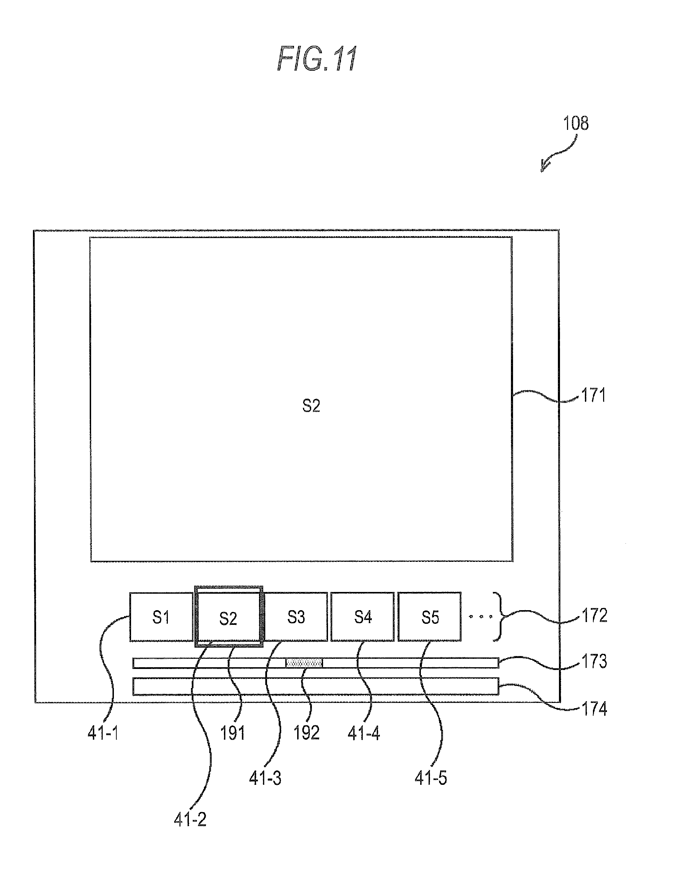

Fig. 11 is a diagram illustrating a display example of the display 108 in which the co-viewing is performed. In addition, although description is made for a display example of the display 108 of the display device 12-1 in Fig. 11, the display example may be similarly applied to the other display device 12.

As shown in Fig. 11, a main content display area 171 is arranged in the display 108, and a scene display area 172 is arranged thereunder. A reproduction position display area 173 and a text display area 174 are arranged under the scene display area 172.

The content C1 currently reproduced in the display device 12-1 is displayed in the main content display area 171.

The scenes 41-1 to 41-M (M denotes an integer equal to or greater than 2) of the co-viewing content 41 are displayed in the scene display area 172. In addition, in the example of Fig. I1, only scenes 41-1 to 41-5 out of the scenes 41-1 to 41-M are displayed. A frame 191 is displayed in the scene currently reproduced in the display device 12-1 out of the scenes 41-1 to 41-5, that is, the scene reproduced in the main content display area 171. In the example of Fig. 11, it is recognized that the scene 41-2 is reproduced in the display device 12-1 based on the position of the frame 191.

A reproduction position display tag 192 is displayed in the reproduction position display area 173. The reproduction position display tag 192 indicates the reproduction position of the co-viewing content 41 reproduced in other display device 12 and moves in synchronization with the reproduction position. In the example of Fig. 11, it is recognized that the scene 41-3 is reproduced in other display device 12 based on the position of the reproduction position display tag 192.

As a result, the user U1 can recognize reproduction positions of the co-viewing content 41 reproduced in the display device 12-1 for the user U1 and the co-viewing content 41 displayed in the display device 12 for other users. For example, if the user U1 is left from the viewing place of the co-viewing content 41 for a predetermined time, the co-viewing content 41 reproduced in the display device 12-1 is reproduced with a delay of a predetermined time. Therefore, a deviation is generated in positions of the frame 191 and the reproduction position display tag 192.

The user U1 can change freely the scene of the co-viewing content 41 reproduced in the display device 12-1 by moving the frame 191. Therefore, for example, the user U1 can view the same scene 41-3 together with other users in the main content display area 171 by moving the position of the frame 191 from the current the scene 41-2 to the scene 41-3.

In addition, if the temporal deviation in the reproduced portion of the co-viewing content 41 is removed in the aforementioned display device 12-1 and each of other display devices 12, the scene display area 172 and the reproduction position display area 173 may not be displayed. Furthermore, in this case, the main content display area 171 may be arranged in the entire area of the display 108.

Text data or the like input by each user are displayed on the text display area 174 in a case where the co-viewing users chat while the co-viewing content 41 is reproduced.

For example, it is assumed that other user enters text when a predetermined scene of the co-viewing content 41 is reproduced. In this case, even when the user U1 views other scene of the co-viewing content 41, the display of the main content display area 171 may be switched to reproduction of the predetermined scene. As a result, the user U1 can view the same scene as the scene viewed by other user when the text is entered and enter opinion or thought.

### <Second Embodiment>

In the first embodiment, the co-viewing content as a co-viewing target and the individual CM content are streamed from the server 11. However, the co-viewing content 41 may not be streamed from the server 11. Instead, the content may be recorded in each display device 12.

### [Configuration Example of Co-viewing System 211]

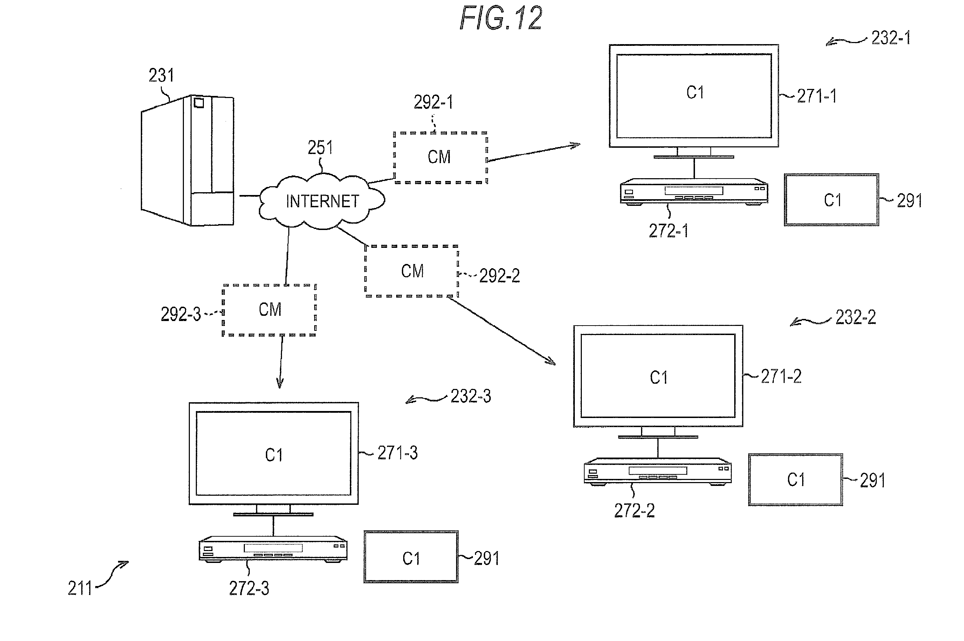

Fig. 12 is a block diagram illustrating a configuration of the co-viewing system according to the second embodiment.

The co-viewing system 211 of Fig. 12 includes a server 231, and user display systems 232-1 to 232-3N (N denotes an integer value equal to or greater than 2, and 3 is set in the example of Fig. 12) connected via the Internet 251. The user display system 232-i (i denotes any integer value between 1 to 3) includes a display device 271-i and a record reproduction device 272-i.

Hereinafter, if it is not necessary to distinguish the user display systems 232-1 to 232-3 individually, it is collectively called a user display system 232. This denotation may be similarly applied to other components.

In addition, basic configurations of the server 231 and the user display system 232 of Fig. 12 are similar to configurations of the server 11 and the display device 12 of Fig. 1, respectively. In this regard, the configuration of the server 11 of Fig. 3 is also incorporated to the configuration of the server 231 of Fig. 12.

The recorded content (hereinafter, referred to as recorded content) 291 is recorded in the record reproduction device 272 of the user display system 232. The user display system 232 transmits identification information of such recorded content 291 to the server 231. Identification information, for example, may be information which can identify the recorded content such as the title of the content.

The co-viewing content storage unit 75 of the server 231 records identification information on the recorded content 291 received from a plurality of user display systems 232.

The co-viewing matching unit 78 of the server 231 determines the recorded content 291 serving as a co-viewing service target from the identification information of a plurality of recorded contents 291 and determines the corresponding recorded content 291 as the co-viewing content.

When the co-viewing content is determined, for example, the co-viewing matching unit 78 may determine the recorded contents 291 recorded in many user display systems 232 as the co-viewing content. For example, the co-viewing content may be determined by inquiring a desired content to be viewed cooperatively to users using the co-viewing service portal WEB unit 72. The co-viewing matching unit 78 determines a user of the user display system 232 where the recorded content 291 determined as the co-viewing content is recorded as a service target user of the co-viewing service.

Moreover, the content distribution management unit 73 of the server 231 streams the individual CM contents 292-1 to 292-3 to the user display systems 232-1 to 232-3, respectively, via the Internet 251.

The content distribution management unit 73 of the server 231 receives information on whether or not the recorded content 291 determined as the co-viewing content from the user display systems 232-1 to 232-3 is reproduced. The server 231 transmits reproduction information of other devices to each user display system 232-1 to 232-3.

The user display system 232-i buffers the individual CM content 292-i delivered from the server 231. In addition, the user display system 232 switches and reproduces the buffered individual CM content and the recorded content 291 determined as the co-viewing content based on the viewing conditions of other users received from the server 231.

In the second embodiment, the co-viewing content is determined out of the recorded contents 291 recorded in each display device 12. Therefore, it is unnecessary to record the co-viewing content in the server 231.

In the example described above, the excitement characteristic of the co-viewing content is used to switch the individual CM content and the co-viewing content. However, without limiting to use of the excitement characteristic, for example, a detection result of a silence detection or a scene change detection may be used.

Depending on the genre of the content, if the sound of the content is silent, it is determined that the content is not excited. Specifically, it is detected as silent if the sound level of the content is lower than a predetermined level. If the audio level of the co-viewing content is detected as silent, the co-viewing content of the content may be switched to the individual CM content. As a result, similar to use of the excitement characteristic, it is possible to reduce the discomfort of the user.

A scene change refers to a point when the content is changed. The scenes before and after the point have a significant difference. For example, a switching point from a main program to a commercial program, or a switching point from a night scene to a day scene is detected as the scene change. Therefore, if the scene change is detected, the co-viewing content may be switched to the individual CM content. As a result, similar to use of the excitement characteristic, it is possible to reduce the discomfort of a user.

### [Application of Program of Embodiment of Present Disclosure]

A series of processes described above may be executed in hardware or software.

In a case where a series of processes are executed by software, a program of the software may be installed in a computer incorporated in dedicated hardware. Alternatively, for example, the program may be installed in a general purpose personal computer or the like capable of executing various functions by installing various programs using the network or the recording medium.

The recording medium containing such a program, as shown in Fig. 4, includes a magnetic disc (including a floppy disk), an optical disc, a compact disc read only memory (CD-ROM)), a digital versatile disc (DVD), a magnetic optical disc (such as a mini-disk (MD)) or a remorable media (a package media) 100 made of a semiconductor memory and the like, distributed for providing a program including a recorded program to a user separately from a device main body. In addition, the recording medium includes a memory 98 where the program is recorded, a hard disk included in the recording medium 101, or the like, provided to a user while embedded in a device main body in advance.

In present specification, steps describing the program recorded in the recording medium may be executed sequentially in order or may be executed in parallel or individually, and may not necessarily be processed sequentially.

It should be noted that the present disclosure is not limited to the aforementioned embodiments and may be modified without departing from the spirit and scope of the present disclosure.

Embodiments may have configurations according to the following clauses.
Clause (1) An information processing apparatus including: a reproduction control unit for controlling reproduction of a predetermined content, wherein the reproduction control unit performs control such that, in a case where the predetermined content is reproduced in synchronization with other information processing apparatuses, information indicating a reproduction state of the predetermined content in the other information processing apparatuses is received, and reproduction is switched between the predetermined content and other content depending on the received information when the predetermined content is reproduced in synchronization with the other information processing apparatuses.
Clause (2) The information processing apparatus according to clause (1), wherein the reproduction control unit performs control such that, in a case where information indicating that reproduction of the predetermined content is paused in the other information processing apparatuses is recevied, reproduction of the predetermined content is paused and switched to reproduction of the other content, and in a case where information indicating that reproduction pause of the predetermined content is released in the other information processing apparatuses is received, reproduction of the other content is paused and switched to reproduction of the predetermined content.
Clause (3) The information processing apparatus according to clause (1) or clause (2), wherein, in a case where an excitement characteristic value representing an excitement degree for the predetermined content is equal to or lower than a predetermined threshold, the reproduction control unit performs control such that reproduction of the predetermined content is paused and switched to reproduction of the other content.
Clause (4) The information processing apparatus according to clause (1), clause (2) or clause (3), further including: a reproduction mode switching unit that switches a reproduction mode for reproducing the predetermined content between a synchronized reproduction mode for reproducing the predetermined content in synchronization with the other information processing apparatuses and a normal reproduction mode for reproducing the predetermined content without synchronization with the other information processing apparatuses, wherein the reproduction control unit receives information on a reproduction state of the predetermined content in the other information processing apparatuses in a case where the reproduction mode switching unit switches to the synchronized reproduction mode.
Clause (5) The information processing apparatus according to any one of clause (1) to clause (4), wherein the reproduction control unit performs control such that reproduction of the predetermined content is paused and switched to reproduction of the other content in a case where a sound level of the predetermined content is equal to or lower than a particular level or a scene change is detected.
Clause (6) The information processing apparatus according to any one of clause (1) to clause (5), further including: a time count unit that starts count of a pause time of the reproduction of the predetermined content in the other information processing apparatuses in a case where information indicating that reproduction of the predetermined content is paused in the the other information processing apparatuses is received by the reproduction control unit.
Clause (7) The information processing apparatus according to any one of clause (1) to clause (6), wherein the reproduction control unit performs control such that reproduction of the other content is switched to reproduction of the predetermined content in a case where the pause time counted by the time count unit exceeds a predetermined allowable time.
Clause (8) The information processing apparatus according to any one of clause (1) to clause (7), wherein the time count unit starts count of a pause time exceeding the allowable time in a case where the pause time exceeds the allowable time.
Clause (9) The information processing apparatus according to any one of clause (1) to clause (8), wherein the reproduction control unit performs control such that, in a case where information indicating that the pause of reproduction of the predetermined content is released in the other information processing apparatuses after the pause time exceeds the allowable time is received, subsequent reproduction of the predetermined content is delayed by the pause time exceeding the allowable time.
Clause (10) The information processing apparatus according to any one of clause (1) to clause (9), wherein, in order to delay the reproduction of the predetermined content by the pause time exceeding the allowable time, the reproduction control unit repeats a process of switching from reproduction of the predetermined content to reproduction of the other content in a case where the excitement characteristic value of the predetermined content is equal to or lower than a predetermined threshold until a period of the reproduction of the other content, performed while the excitement characteristic value is equal to or lower than the predetermined threshold becomes the pause time exceeding the allowable time.
Clause (11) The information processing apparatus according to any one of clause (1) to clause (10), wherein, in order to delay the reproduction of the predetermined content by the pause time exceeding the allowable time, the reproduction control unit repeats the process of switching from reproduction of the predetermined content to reproduction of the other content in a case where the excitement characteristic value of the predetermined content is equal to or lower than the predetermined threshold until a period of reproduction of the other content, performed while the excitement characteristic value is equal to or lower than a predetermined threshold corresponds to a value obtained by subtracting a reproduction time of a predetermined period of the predetermined content from the pause time exceeding the allowable time.
Clause (12) The information processing apparatus according to any one of clause (1) to clause (11), wherein the other content includes a content containing a story relating to the predetermined content, an advertisement content, or a content reflecting a user's preference.
Clause (13) The information processing apparatus according to any one of clause (1) to clause (12), further including: a display unit that displays text data transmitted/received to/from the other information processing apparatuses in the middle of reproduction of the predetermined content or the other content by the reproduction control unit.
Clause (14) The information processing apparatus according to any one of clause (1) to clause (13), further including: a recording unit that records the predetermined content and the other content, both the predetermined content and the other content being streamed via a network, wherein the reproduction control unit controls reproduction by switching between the predetermined content and the other content recorded in the recording unit depending on the received information.
Clause (15) The information processing apparatus according to any one of clause (1) to clause (14), further including: a recording unit that records the predetermined content and the other content, the other content being streamed via a network, wherein the reproduction control unit controls reproduction by switching between the predetermined content and the other content recorded in the recording unit depending on the received information.

The present disclosure may be applied to an information processing apparatus for performing a synchronized reproduction of a content.

It should be understood by those skilled in the art that various modifications, combinations, sub-combinations and alterations may occur depending on design requirements and other factors insofar as they are within the scope of the appended claims or the equivalents thereof.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

In accordance with some embodiments of the invention there is provided an information processing apparatus, comprising: interface that receives first content transmitted from a content distribution apparatus to the information processing apparatus and another information processing apparatus in synchronization; and a processor that controls a reproduction state of the first content at the information processing apparatus, and controls the interface to transmit reproduction state information corresponding to the reproduction state to the content distribution apparatus, wherein the content distribution apparatus controls transmission of second content to the another information processing apparatus based on the received reproduction state information.

In accordance with some embodiments the information processing apparatus further comprises a user interface that receives an input instructing the information processing apparatus to switch between normal reproduction mode and synchronized reproduction mode.

In accordance with some embodiments the processor controls the information processing apparatus to switch between normal reproduction mode and synchronized reproduction mode based on the input received at the user interface.

In accordance with some embodiments the processor controls pausing reproduction of the first content at the information processing apparatus, and controls the interface to transmit reproduction state information indicating that the reproduction of the first content at the information processing apparatus is paused.

In accordance with some embodiments the content distribution apparatus transmits the second content to the another information processing apparatus upon receiving the reproduction state information indicating that the reproduction of the first content at the information processing apparatus is paused.

In accordance with some embodiments the processor controls resuming reproduction of the first content at the information processing apparatus, and controls the interface to transmit reproduction state information indicating that the reproduction of the first content at the information processing apparatus is resumed.

In accordance with some embodiments the content distribution apparatus transmits the first content to the information processing apparatus and the another information processing apparatus in synchronization upon receiving the reproduction state information indicating that the reproduction of the first content at the information processing apparatus is resumed.

In accordance with some embodiments the information processing apparatus further comprises a user interface that receives an input instructing the information processing apparatus to pause or resume reproduction of the first content at the information processing apparatus.

In accordance with some embodiments the information processing apparatus further comprises a viewing condition determination unit that determines a viewing condition of a viewer at the information processing apparatus.

In accordance with some embodiments the information processing apparatus further comprises a vision sensor that detects whether a viewer is located in a position where the viewer can view the information processing apparatus, and outputs a result of the detection to the viewing condition determination unit.

In accordance with some embodiments the information processing apparatus further comprises an auditory sensor that detects whether a viewer is located in a position where the viewer can view the information processing apparatus, and outputs a result of the detection to the viewing condition determination unit.

In accordance with some embodiments the viewing condition determination unit determines that the viewer is not in a viewing place corresponding to the information processing apparatus, and outputs viewing condition information to the processor indicating that the viewer is not in the viewing place corresponding to the information processing apparatus.

In accordance with some embodiments the processor controls pausing reproduction of the first content at the information processing apparatus upon receiving the viewing condition viewing condition information from the viewing condition determining unit indicating that the viewer is not in the viewing place corresponding to the information processing apparatus, and controls the interface to transmit reproduction state information indicating that the reproduction of the first content at the information processing apparatus is paused.

In accordance with some embodiments the content distribution apparatus transmits the second content to the another information processing apparatus upon receiving the reproduction state information indicating that the reproduction of the first content at the information processing apparatus is paused.

In accordance with some embodiments the viewing condition determination unit determines that the viewer is in a viewing place corresponding to the information processing apparatus, and outputs viewing condition information to the processor indicating that the viewer is in the viewing place corresponding to the information processing apparatus.

In accordance with some embodiments the processor controls resuming reproduction of the first content at the information processing apparatus upon receiving the viewing condition information from the viewing condition determining unit indicating that the viewer is in the viewing place corresponding to the information processing apparatus, and controls the interface to transmit reproduction state information indicating that the reproduction of the first content at the information processing apparatus is resumed.

In accordance with some embodiments the content distribution apparatus transmits the first content to the information processing apparatus and the another information processing apparatus in synchronization upon receiving the reproduction state information indicating that the reproduction of the first content at the information processing apparatus is resumed.

In accordance with some embodiments the information processing apparatus further comprises an extraction unit that extracts at least one of an image characteristic amount and audio characteristic amount from the first content.

In accordance with some embodiments the processor controls pausing reproduction of the first content when the audio characteristic amount is less than or equal to a predetermined level or when a scene change is detected in the first content.

In accordance with some embodiments the processor computes an excitement characteristic from the at least one of the image characteristic amount and the audio characteristic amount, and controls the reproduction state of the first content at the information processing apparatus based on the computed excitement characteristic.

In accordance with some embodiments the processor compares a value corresponding to the excitement characteristic to a predetermined threshold value, and controls pausing reproduction of the first content when the value corresponding to the excitement characteristic is less than or equal to the predetermined threshold value.

In accordance with some embodiments the processor determines a length of time that reproduction of the first content has been paused, and controls resuming reproduction of the first content when the length of time exceeds a predetermined threshold value.

In accordance with some embodiments the interface receives, from the content distribution apparatus, information indicating that reproduction of the first information at the another information processing apparatus has been paused, and the processor initiates a counter based on the received information.

In accordance with some embodiments the processor compares a value of the counter to a first predetermined threshold value, and controls the information processing apparatus to reproduce content other than the first content when the value of the counter exceeds the first predetermined threshold value.

In accordance with some embodiments the processor re-initiates the counter when the value of the counter exceeds the first predetermined threshold value.

In accordance with some embodiments the processor compares a value of the re-initiated counter to a second predetermined threshold value, and controls the information processing apparatus to resume reproduction of the first content when the value of the re-initiated counter exceeds the second predetermined threshold value

## Claims

1. An information processing apparatus, comprising:
interface that receives first content transmitted from a content distribution apparatus to the information processing apparatus and another information processing apparatus in synchronization; and
a processor that controls a reproduction state of the first content at the information processing apparatus, and controls the interface to transmit reproduction state information corresponding to the reproduction state to the content distribution apparatus, wherein
the content distribution apparatus controls transmission of second content to the another information processing apparatus based on the received reproduction state information.

2. The information processing apparatus of claim 1, further comprising:
a user interface that receives an input instructing the information processing apparatus to switch between normal reproduction mode and synchronized reproduction mode.

3. The information processing apparatus of claim 1, wherein the processor controls pausing reproduction of the first content at the information processing apparatus, and controls the interface to transmit reproduction state information indicating that the reproduction of the first content at the information processing apparatus is paused.

4. The information processing apparatus of claim 3, wherein the content distribution apparatus transmits the second content to the another information processing apparatus upon receiving the reproduction state information indicating that the reproduction of the first content at the information processing apparatus is paused.

5. The information processing apparatus of claim 1, further comprising:
a user interface that receives an input instructing the information processing apparatus to pause or
resume reproduction of the first content at the information processing apparatus.

6. The information processing apparatus of claim 1, further comprising:
a viewing condition determination unit that determines a viewing condition of a viewer at the information processing apparatus, and optionaly, wherein the viewing condition determination unit determines that the viewer is not in a viewing place corresponding to the information processing apparatus, and outputs viewing condition information to the processor indicating that the viewer is not in the viewing place corresponding to the information processing apparatus.

7. The information processing apparatus of claim 6, further comprising:
a vision sensor that detects whether a viewer is located in a position where the viewer can view the information processing apparatus, and outputs a result of the detection to the viewing condition determination unit and / or an auditory sensor that detects whether a viewer is located in a position where the viewer can view the information processing apparatus, and outputs a result of the detection to the viewing condition determination unit.

8. The information processing apparatus of claim 1, further comprising:
an extraction unit that extracts at least one of an image characteristic amount and audio characteristic amount from the first content.

9. The information processing apparatus of claim 8, wherein the processor controls pausing reproduction of the first content when the audio characteristic amount is less than or equal to a predetermined level or when a scene change is detected in the first content.

10. The information processing apparatus of claim 8, wherein the processor computes an excitement characteristic from the at least one of the image characteristic amount and the audio characteristic amount, and controls the reproduction state of the first content at the information processing apparatus based on the computed excitement characteristic.

11. The information processing apparatus of claim 8, wherein the processor compares a value corresponding to the excitement characteristic to a predetermined threshold value, and controls pausing reproduction of the first content when the value corresponding to the excitement characteristic is less than or equal to the predetermined threshold value.

12. The information processing apparatus of claim 1, wherein the interface receives, from the content distribution apparatus, information indicating that reproduction of the first information at the another information processing apparatus has been paused, and the processor initiates a counter based on the received information, and optionally, wherein the processor compares a value of the counter to a first predetermined threshold value, and controls the information processing apparatus to reproduce content other than the first content when the value of the counter exceeds the first predetermined threshold value.

13. An information processing method performed by an information processing apparatus, the method comprising:
receiving, at an interface of the information processing apparatus, first content transmitted from a content distribution apparatus to the information processing apparatus and another information processing apparatus in synchronization;
controlling, by a processor of the information processing apparatus, a reproduction state of the first content at the information processing apparatus; and
controlling, by the processor, the interface to transmit reproduction state information corresponding to the reproduction state to the content distribution apparatus, wherein
the content distribution apparatus controls transmission of second content to the another information processing apparatus based on the received reproduction state information.

14. A non-transitory computer-readable medium including computer program instructions, which when executed by an information processing apparatus, cause the information processing apparatus to perform a method comprising:
receiving first content transmitted from a content distribution apparatus to the information processing apparatus and another information processing apparatus in synchronization;
controlling a reproduction state of the first content at the information processing apparatus; and
transmitting reproduction state information corresponding to the reproduction state to the content distribution apparatus, wherein
the content distribution apparatus controls transmission of second content to the another information processing apparatus based on the received reproduction state information.

15. An information processing apparatus, comprising:
a processor that controls an interface to transmit first content to a plurality of display devices, wherein
the interface receives information indicating a reproduction state of the first content at the one of the plurality of display devices, and
the processor controls the interface to transmit second content to another one of the plurality of display devices upon receiving the information indicating the reproduction state.
